# EUROPEAN PATENT SPECIFICATION

(11) **EP 3 549 447 B1**
(45) Date of publication and mention of the grant of the patent: **30.12.2020**
(21) Application number: 18166201.6
(22) Date of filing: 06.04.2018
(51) Int. Cl.: A21C 11/04, A21C 11/08

(54) **MACHINE FOR MOULDING DOUGH FOR OVEN-BAKED PRODUCTS**
MASCHINE ZUM FORMEN VON TEIG FÜR BACKWAREN
MACHINE DE MOULAGE DE PÂTE POUR PRODUITS CUITS AU FOUR

(43) Date of publication of application: 09.10.2019
(73) Proprietor: Soremartec S.A., 2633 Senningerberg (LU)
(72) Inventor: MOLLO, Marco, 12051 Alba (IT); ARAGONE, Giovanni, 15067 Novi Ligure (IT)
(74) Representative: Frontoni, Stefano

(56) References cited:
- EP-A1- 0 772 405
- US-A- 1 971 087
- US-A- 3 937 848
- US-A- 4 586 888
- US-A1- 2007 224 306

## Description

The present invention relates to a machine for moulding dough for oven-baked products, of the type comprising:
- a hopper open underneath designed to contain the dough to be moulded;
- a rotary moulding roll, having on its outer lateral surface a plurality of forming moulds;
- a rotary feed roll, configured for pushing the dough coming from said hopper into said moulds of said moulding roll to form semi-finished products, each in a respective mould; and
- a conveyor belt for feeding said semi-finished products to stations downstream of said machine, in which said belt runs over said moulding roll for a stretch, coming into contact with said lateral surface of said feed roll in a first angular position around said feed roll, and detaching from said lateral surface in a second angular position downstream of said first angular position, with reference to the direction of rotation of said roll, so as to remove said semi-finished products from said forming moulds.

A machine of the type referred to above is, for example, described in the documents Nos. EP1142478 and US4155691. A machine according to the preamble of Claim 1 is known from US4586888A and US1971087A.

The object of the present invention is to provide a machine of the type referred to above that will be an improvement over the machines of the prior art, in particular in order to achieve one or more of the following advantages:
- a higher quality of production, in particular for products having complex shapes or multiple thicknesses;
- a higher efficiency of production, in particular reducing the number of broken and incomplete moulded products;
- ease of assembly and disassembly of components of the machine;
- improved possibility of setting and regulation of the machine; and
- higher versatility of use as regards the types of dough and the shapes of the products to be obtained.

The machine forming the subject of the present invention is defined by the characteristics specified Claim 1. The present invention moreover regards a moulding process according to Claim 11.

The claims form an integral part of the technical teaching provided herein in relation to the invention.

Further characteristics and advantages of the invention will emerge clearly from the ensuing description with reference to the annexed drawings, which are provided purely by way of non-limiting example and in which:
- Figure 1 is a schematic illustration of a preferred embodiment of the machine described herein;
- Figure 1A illustrates the moulding roll of the machine described herein in a cartesian plane;
- Figure 2 is a schematic illustration of a further embodiment of the machine described herein;
- Figure 3 is a schematic illustration of yet a further embodiment of the machine described herein;
- Figure 4 illustrates a moulding machine according to the prior art; and
- Figure 5 is a schematic illustration of a further embodiment of the machine described herein.

In the ensuing description, specific details are illustrated aimed at enabling an in-depth understanding of the embodiments. The embodiments may be provided without one or more of the specific details, or with other methods, components, or materials, etc. In other cases, known structures, materials, or operations are not illustrated or described in detail so that various aspects of the embodiment will not be obscured.

The references used herein are only provided for convenience and hence do not define the sphere of protection or the scope of the embodiments.

The moulding machine described herein is of the rotary-moulding type. An example of application of the machine described herein regards moulding dough for biscuits.

In general, according to the type in question, the machine described herein comprises:
- a hopper open underneath designed to contain the dough to be moulded;
- a rotary moulding roll, having on its outer lateral surface a plurality of forming moulds;
- a rotary feed roll, configured for pushing the dough coming from the hopper into the moulds of the moulding roll, to form semi-finished products, each in a respective mould;
- a conveyor belt for feeding the semi-finished products to subsequent processing stations, wherein the belt runs over the moulding roll for a stretch, coming into contact with the lateral surface of the feed roll in a first angular position around the feed roll, and detaching from the lateral surface in a second angular position downstream of the first position, with reference to the direction of rotation of the feed roll, so as to remove the semi-finished products from the forming moulds.

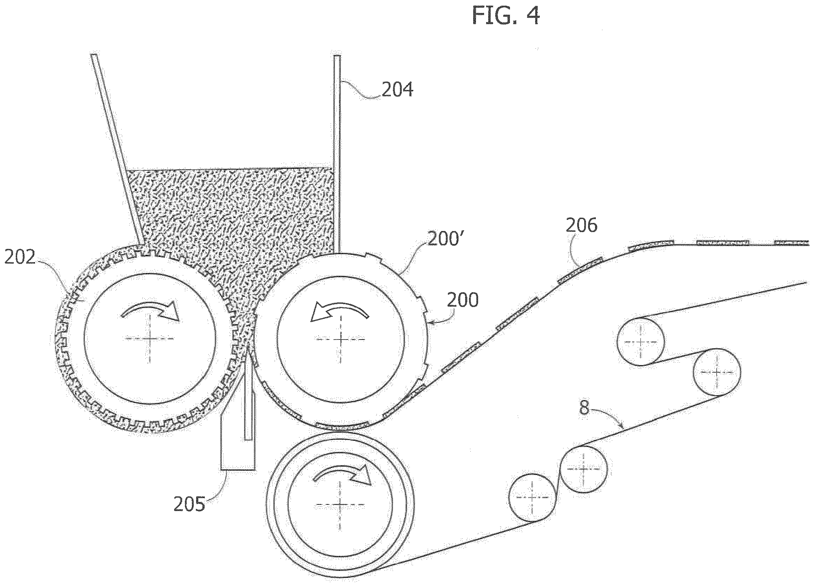

Figure 4 is a schematic illustration of a conventional configuration of machines of the type in question.

The moulding roll 200 and the feed roll 202 are arranged opposed to one another underneath the hopper 204, receiving the dough fed through the bottom of the hopper in the space comprised between them. Their axes of rotation are arranged in one and the same substantially horizontal plane. The two rolls 200 and 202 turn in opposite directions so as to pull the dough downwards; in the example illustrated, the moulding roll 200 turns in a counterclockwise direction, and the feed roll 202 in a clockwise direction.

The feed roll 202 acts on the dough through its knurled lateral surface, favouring flow thereof downwards and pressing the dough into the mould cavities 200' of the moulding roll in the area where the two rolls are at the shortest distance apart.

A blade 205 set underneath the two rolls, in a vertical position, separates the dough contained in the mould cavities 200' from the dough that remains adherent to the feed roll 202.

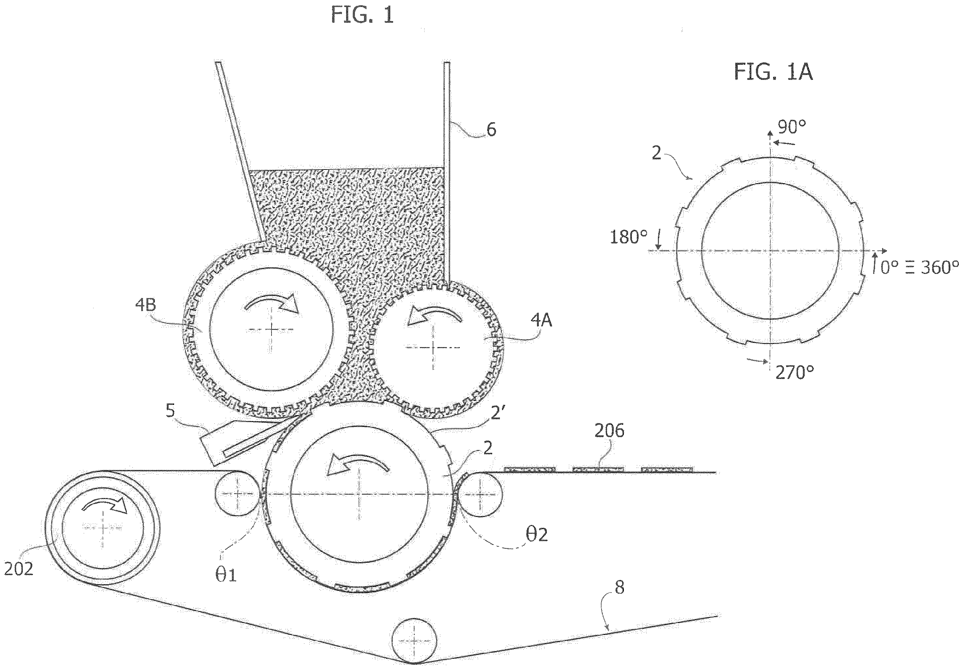

The conveyor belt 206, which extends according to a closed loop around a plurality of rotary rolls via which it is moved, moves into contact with the moulding roll 200 in the angular position of 270° and runs over it for a limited stretch until the angular position of 315° is approximately reached, where it starts to separate from the roll 200. Incidentally, it should be noted that the angular positions indicated here and in what follows refer to the goniometric circumference in a cartesian plane set orthogonal to the axis of rotation of the moulding roll and with the origin of the axes of the co-ordinates positioned so as to coincide with the axis of rotation, where the angles are measured in a counterclockwise direction starting from the point of intersection between the circumference and the positive semi-axis of abscissae (see Figure 1A).

Along the above stretch, the belt 206 presses against the semi-finished products contained in the cavities 200' to get them to adhere, and when the belt 206 separates itself from the moulding roll 200, the semi-finished products remain attached thereto and are extracted from the respective mould cavity as a result of detachment of the belt from the moulding roll.

From this position, the belt 206 proceeds along its path, feeding the semi-finished products to subsequent stations of the production line, for example to a baking station.

As will be said in what follows, the configuration described above presents a series of drawbacks that the moulding machine described herein is designed to overcome.

With reference now to Figure 1, this illustrates a preferred embodiment of the machine described herein.

It comprises two feed rolls 4A, 4B that are positioned underneath the hopper 6, in respective positions opposed to one another with respect to the flow of dough fed through the bottom of the hopper. These rolls are, instead, positioned above the moulding roll 2.

According to the present invention, the two feed rolls 4A, 4B are prearranged for turning in opposite directions and have the function of determining a flow of dough directed against the lateral surface of the moulding roll 2. In particular, as may be noted in Figure 1, the flow of dough is oriented in a direction secant with respect to the moulding roll, instead of in a tangential direction as in the machine of Figure 4 according to the prior art.

As conventionally envisaged in the prior art, the two feed rolls 4 have surfaces with formations in relief, for example knurled surfaces, to favour adhesion of the dough.

The dough that is pushed by the two rolls 4A and 4B against the moulding roll 2 comes to press against the lateral surface of the latter, thus filling the mould cavities 2'.

It should be noted that the above modality of feeding dough is completely different from the one envisaged in the known solution of Figure 4. In this figure, the single moulding roll presses the dough against the mould cavity simply as a result of its positioning in opposition to the moulding roll. Instead, the two feed rolls of the machine described herein provide a true flow of the dough that is directed against the lateral surface of the moulding roll.

The above modality of feed enables a greater control over the dough fed to the moulding roll.

In particular, it is possible to control the pressure with which the dough is pushed into the mould cavities by regulating the speed of rotation of the two feed rolls.

By intervening in this way, it is possible to guarantee a constant quality of production as a function of the type and conditions of the dough. For instance, for particularly hard doughs, without fats and/or sugars and/or water, it is possible to envisage a speed of rotation of the two rolls greater than for applications with softer doughs, rich in fats and/or sugars, this in order to determine a higher pressure that will guarantee total filling of the mould cavities provided on the moulding roll 2.

In this way, it is possible to guarantee optimal filling of the mould cavities for any type of dough.

The machine described herein may comprise a control unit configured for regulating the speed of rotation of the feed rolls 4A and 4B on the basis of the criteria referred to above.

Among other things, the pressures on the dough that can be reached in the machine described herein enable degrees of compacting of the dough to be obtained within the mould cavity that are considerably higher than those obtained in the prior art.

It is consequently possible to obtain semi-finished products even of complex shapes, for which a marked compacting of the dough is necessary to ensure total filling of the mould cavities and guarantee that the products maintain the shape obtained even after they have been removed from the mould cavities.

Complex shapes that may be obtained comprise, for example, products having a three-dimensional structure, such as products shaped like a container, i.e., ones having a bottom and a closed perimetral transverse edge.

On the other hand, it should again be noted that the pressure of the dough in the space comprised between the feed rolls 4A and 4B is determined also by the distance between the two rolls, which can be regulated during setting-up of the machine.

To return to Figure 1, the dough that comes to fill the mould cavities 2' is brought out of the area comprised between the two feed rolls 4A and 4B as a result of rotation of the moulding roll 2.

The direction of rotation of the moulding roll 2 determines the outlet side of the dough from the aforesaid area.

The feed roll that is located on the same side - the roll 4B in the example illustrated in Figure 1 - is configured for turning in a discordant direction, whereas the other feed roll - the roll 4A in the example of Figure 1 - is configured for turning in a concordant direction.

On the aforesaid outlet side of the dough, set up against the point of minimum distance between the moulding roll 2 and the feed roll 4B, is a blade 5 that is designed to separate the dough contained in the cavities 2' of the moulding roll 2 from the dough that remains, instead, adherent to the lateral surface of the roll 4B.

This positioning of the blade on the outer side of the set of the rolls 4A, 4B, and 2 facilitates installation thereof, as likewise possible disassembly and re-assembly for purposes of replacement or maintenance, it not being necessary for this purpose to displace or remove the rolls themselves, as instead is the case in machines according to the prior art.

Moreover, thanks to the above positioning, sufficient space is obtained to orient the blade with respect to the moulding roll even according to configurations that depart from the condition of tangency conventionally envisaged in the prior art.

The blade may in particular be oriented in directions incident with respect to the moulding roll, this in order to favour an action thereof of scraping of the dough from the outer surface of the moulding roll.

To return to Figure 1, the machine described herein comprises a conveyor belt 8 that, like the belt 206 of the known solution of Figure 4, is designed to remove the semi-finished products from the moulding roll and to feed them to the stations set downstream of the machine.

However, in the machine described herein, the conveyor belt 8 moves into contact with the lateral surface of the moulding roll 2 in a position advanced with respect to the angular position of 270° envisaged for the belt 206 according to the solution of the prior art (see Figure 1A as reference for the angular position indicated).

In particular, in various preferred embodiments, the belt 8 moves into contact with the moulding roll 2 in a position θ1 comprised between the angular positions of 180° and 270° - in the position of 180° in the example illustrated - and runs over it up to a position θ2 comprised between the positions of 270° and 360° - the position of 360° in the example illustrated.

In the position θ2, the belt 8 separates from the moulding roll 2 and proceeds its path along a substantially horizontal stretch, through which it feeds the semi-finished products to the subsequent stations.

Thanks to the configuration indicated, the belt 8 comes to press the semi-finished products against the respective mould cavities 2' along the stretch in which these are located facing downwards as a result of the rotation of said roll.

By so doing, the belt 8 acts as support for the semi-finished products opposing the force of gravity, and keeps the products fixed in position within the respective cavities 2', preventing any movement thereof.

This guarantees that the products remain in the original correct position within the cavities 2' until they are released onto the belt 8.

Instead, once again with reference to the known solution of Figure 4, it may be noted that, during operation of this solution, the semi-finished products just formed contained in the cavities 200' are completely exposed to the force of gravity as soon as they get past the blade 205, and are pressed against the moulding roll only in the angular position of 270°, where the belt 206 comes into contact with the moulding roll 200.

Consequently, it may happen that, once they have got past the blade 205, as a result of the force of gravity, the products modify their position inside the respective mould cavities, and hence they are then pressed against said cavities by the belt 206, when they are no longer in their original correct position, with the risk of undergoing deformation or getting damaged.

In view of the foregoing, this drawback is, instead, completely overcome in the machine described herein.

It should be noted that the configuration of the belt 8 illustrated in Figure 1 is provided purely by way of example.

In particular, the angular positions θ1, θ2 mentioned above may vary as a function of the needs of the various applications.

The angular position θ1 may, for example, be beyond 180° and between the 180° and 270°, in the case where it is possible to guarantee that between 180° and the position θ1 the semi-finished products are not subject to displacements, notwithstanding the absence, in that interval, of the belt 8. On the other hand, the position θ1 may also be before 180°, for example for constructional requirements.

Likewise, the angular position θ2 may be before 360° or even before 270°, according to the possible constructional requirements and requirements of operation of the machine.

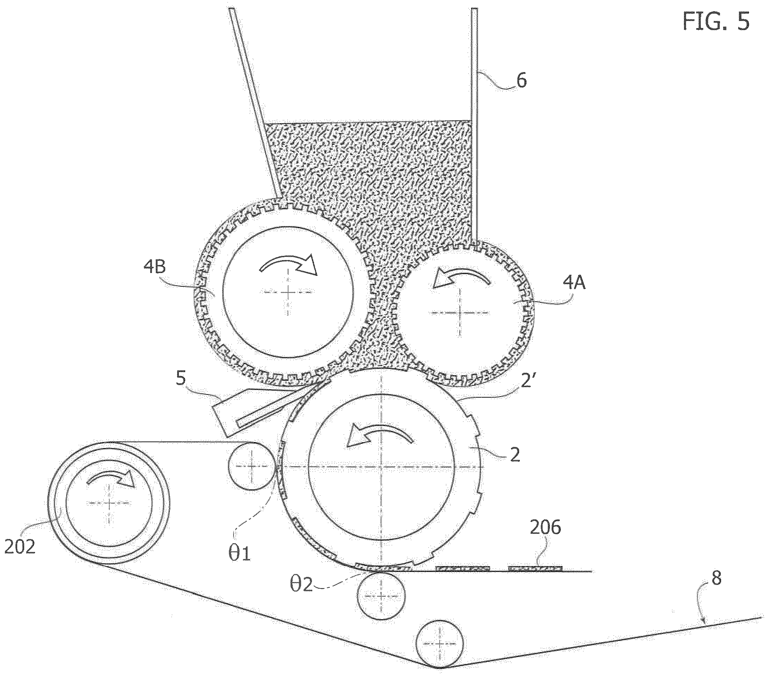

In a preferred variant of the machine described herein, the angular position θ1 is around 180° and the angular position θ2 is at 270° or slightly before (Figure 5).

It should now be noted that the angular positions θ1, θ2 mentioned above refer to the case where the machine is pre-arranged with the moulding roll 2 designed to turn in a counterclockwise direction.

In the opposite case, it is evident for the person skilled in the sector that the positions θ1, θ2 will, instead, be the ones exactly specular with respect to the vertical axis of symmetry of the roll.

Consequently, the position θ1 will be beyond 270°, preferably between 360° and 270°, and the position θ2 will preferably be before 270°, even more preferably between 180° and 270°.

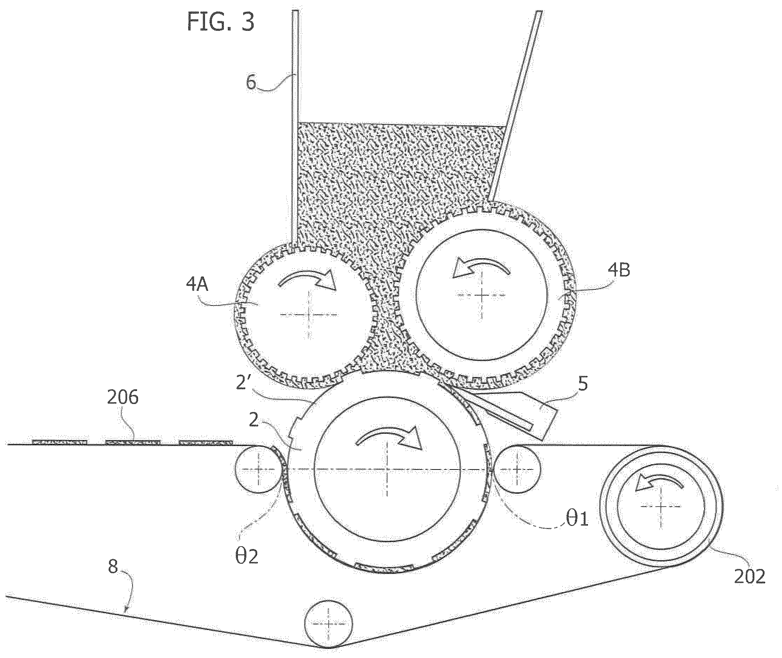

In this connection, Figure 3 illustrates an embodiment equivalent to the one illustrated in Figure 1, which differs from the latter simply in that the machine is pre-arranged with the moulding roll 2 designed to turn in a clockwise direction instead of in a counterclockwise direction: in this case, the position θ1 is approximately at 360°, and the position θ2 is approximately at 180°.

To return to Figure 1, in preferred embodiments, as in the one illustrated, the belt 8 separates from the moulding roll 2, following, practically immediately, a path in a horizontal plane, along which the semi-finished products are fed to the subsequent stations of the production line. In the variant where the position θ2 is at 270°, the belt 8 separates following directly a path in a horizontal plane.

This configuration is advantageous in so far as it does not subject the semi-finished products to the stresses, prevalently bending stresses, to which the products that travel on the belt 206 of the machine of Figure 4 according to the prior art, where the belt 206 changes direction in the passage from the rising path to the subsequent horizontal path, are instead subjected.

Also this aspect contributes to guaranteeing an optimal quality of production.

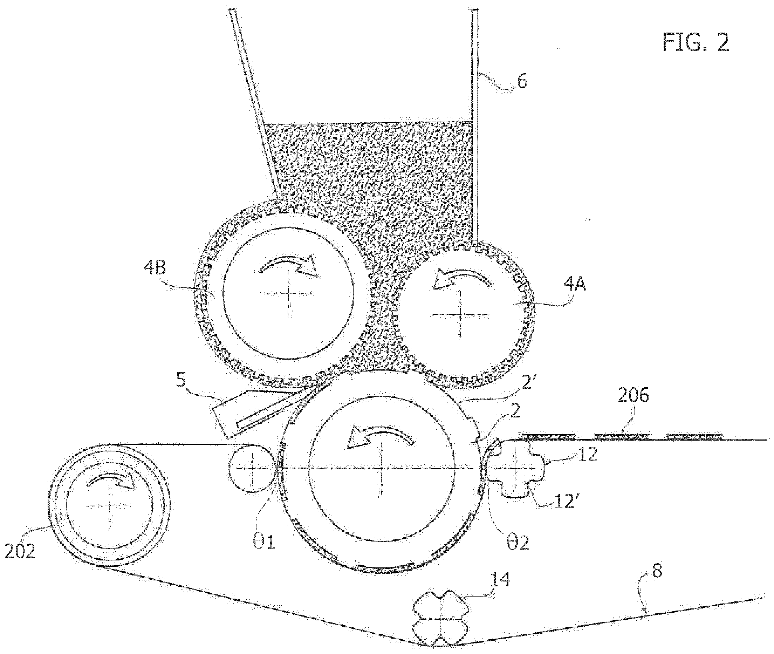

With reference now to Figure 2, the machine illustrated here is characterized, as compared to that of Figure 1, in that a lobed roll 12 is provided that is designed to exert an action of thrust of the belt 8 against the lateral surface of the moulding roll 2 that is aimed at the points where the mould cavities 2' are provided.

For this purpose, the roll 12 has, along its circumference, radially projecting formations 12' that follow one another according to a pitch that corresponds to the pitch with which the mould cavities 2' follow one another on the lateral surface of the moulding roll 2.

During rotation of the roll, these projections move alternately into contact with the belt 6 and pull it each time against the moulding roll 2 in the points into which simultaneously respective mould cavities 2' move.

The purpose of the above action is to ensure adhesion of the semi-finished products contained in the cavities 2' to the belt 8.

In various preferred embodiments, as in the one illustrated, a second lobed roll 14 having a configuration corresponding to the roll 12 is associated to the belt 8, and is configured for exerting thereon an equivalent action of pressure at instants when it is released from the roll 12, the purpose being to keep the belt 8 constantly, throughout its perimeter, in one and the same condition of tension.

## Claims

1. A machine for moulding dough for oven-baked products, of the type comprising:
- a hopper (6) open underneath designed to contain the dough to be moulded;
- a rotary moulding roll (2), having on its outer lateral surface a plurality of forming moulds (2');
- first an second feed rolls (4A, 4B), configured for pushing the dough coming from said hopper into said moulds of said moulding roll to form semi-finished products, each in a respective mould; and
- a conveyor belt (8) for feeding said semi-finished products to subsequent processing stations, wherein said belt runs over said moulding roll for a stretch (2), coming into contact with said lateral surface of said moulding roll in a first angular position (θ1) around said moulding roll, and detaching from said lateral surface in a second angular position (θ2) downstream of said first angular position (θ1), with reference to the direction of rotation of said roll, so as to remove said semi-finished products from said forming moulds (2'),
wherein said first angular position (θ1) is located before the position of 270°, in the case of rotation in a counterclockwise direction by said moulding roll (2), and beyond the position of 270°, in the case of rotation in a clockwise direction, in such a way that said belt (8) run over said moulding roll (2) between said first and second angular positions, will keep said semi-finished products in position, within said moulds, against the action of the force of gravity,
said angular positions referring to the goniometric circumference in a cartesian plane set orthogonal to the axis of rotation of said moulding roll (2) and with the origin of the axes of the co-ordinates positioned on said axis of rotation, where the angles are measured in a counterclockwise direction starting from the point of intersection between the circumference and the positive semi-axis of abscissae,
wherein said first feed roll (4A) and said second feed roll (4B) are opposed to each other and are positioned underneath said hopper (4) so as to receive in the space comprised between them the dough that is delivered through the bottom of said hopper, and wherein said first and second feed rolls (4A, 4B) are positioned above said moulding roll (2),
wherein said first and second rolls (4A, 4B) are prearranged for turning in opposite directions so as to determine a flow of dough directed against said moulding roll (2).

2. The machine according to Claim 1, wherein said first position θ1) is comprised between 180° and 270°, in the case of a rotation in a counterclockwise direction by said moulding roll (2), or between 270° and 360°, in the case of a rotation in a clockwise direction by said moulding roll (2).

3. The machine according to Claim 1 or Claim 2, wherein said second angular position (θ2) is beyond 270°, preferably between 270° and 360°, in the case of a rotation in a counterclockwise direction by said moulding roll (2), or else is before 270°, preferably between 180° and 270°, in the case of a rotation in a clockwise direction by said moulding roll (2).

4. The machine according to any one of the preceding claims, wherein said first angular position (θ1) is approximately at 180° and said second angular position (θ2) is approximately at 360°, in the case of rotation in a counterclockwise direction by said moulding roll (2), and vice versa, in the case of rotation in a clockwise direction by said moulding roll (2) .

5. The machine according to Claim 1, comprising a control unit for regulation of the speed of rotation of said first and second rolls (4A, 4B) as a function of a predetermined parameter indicating the pressure exerted on the dough pressed into said mould cavities.

6. The machine according to Claim 5, wherein said first and second rolls (4A, 4B) are prearranged for being regulated individually, in a separate way.

7. The machine according to Claim 1, wherein said first and second rolls (4A, 4B) are prearranged for determining a flow of dough in a direction secant with respect to said moulding roll.

8. The machine according to any one of the preceding claims, comprising a blade (5) positioned laterally with respect to the set of said rolls (2, 4A, 4B) .

9. The machine according to any one of the preceding claims, wherein said belt (8) separates from said moulding roll (2), following a path in a horizontal plane.

10. A process for moulding dough for oven-baked products implemented via a machine according to any one of the preceding claims, comprising the steps of:
- delivering the dough from the bottom of said hopper (6);
- providing at output from said hopper (4) a flow of dough directed against said moulding roll (2) and, by means of said first and second feed rolls (4A, 4B), pushing the dough into said moulds (2') of said moulding roll (2), to form semi-finished products, each in a respective mould;
- pressing said semi-finished products against said moulds (2') via said conveyor belt (8), starting from said first angular position (θ1) up to said second angular position (θ2); and
- extracting, via said belt, said semi-finished products and feeding them to a processing station downstream of said machine.

11. The process according to Claim 10, wherein said flow of dough is oriented in a direction secant with respect to said moulding roll (2).

## Patentansprüche

1. Maschine zum Formen von Teig für im Ofen gebackene Produkte, von dem Typ, der aufweist:
- einem Trichter (6), der an der Unterseite offen ist und dazu eingerichtet ist, den zu formenden Teig aufzunehmen;
- eine Drehformwalze (2), die auf ihrer äußeren Seitenfläche eine Vielzahl von Formungsformen (2') aufweist;
- erste und zweite Zuführwalzen (4A, 4B), die zum Drücken des von dem Trichter kommenden Teigs in die Formen der Formwalze konfiguriert sind, so dass Halbfertigprodukte, jeweils in einer entsprechenden Form, ausgebildet werden; und
- ein Förderband (8) zum Zuführen der Halbfertigprodukte zu nachfolgenden Verarbeitungsstationen, wobei das Band für eine Strecke über die Formwalze (2) läuft, wobei es mit der Seitenfläche der Formwalze in einer ersten Winkelposition (θ1) um die Formwalze in Kontakt kommt und sich von der Seitenfläche in einer zweiten Winkelposition (θ2) stromabwärts der ersten Winkelposition (θ1) löst, in Bezug auf die Drehrichtung der Walze, so dass die Halbfertigprodukte von den Formungsformen (2') entfernt werden,
wobei die erste Winkelposition (θ1) sich vor der Position von 270° befindet, im Falle einer Drehung in Gegenuhrzeigersinnrichtung durch die Formwalze (2), und jenseits der Position von 270°, im Falle einer Drehung in Uhrzeigersinnrichtung, in einer solchen Weise, dass das Band (8), das zwischen der ersten und der zweiten Winkelposition über die Formwalze (2) läuft, die Halbfertigprodukte in den Formen gegen die Wirkung der Schwerkraft in Position hält,
wobei sich die Winkelpositionen auf den goniometrischen Umfang in einer kartesischen Ebene beziehen, die orthogonal zu der Drehachse der Formwalze (2) liegt und wobei der Ursprung der Achsen der Koordinaten auf der Drehachse positioniert ist, wobei die Winkel in einer Gegenuhrzeigersinnrichtung gemessen werden, ausgehend von dem Schnittpunkt zwischen dem Umfang und der positiven Halbachse der Abszissen,
wobei die erste Zuführwalze (4A) und die zweite Zuführwalze (4B) einander gegenüberliegen und unterhalb des Trichters (4) so angeordnet sind, dass sie in dem zwischen ihnen enthaltenen Raum den Teig aufnehmen, der durch den Boden des Trichters bereitgestellt wird, und wobei die erste und die zweite Zuführwalze (4A, 4B) oberhalb der Formwalze (2) angeordnet sind,
wobei die erste und die zweite Walze (4A, 4B) zum Drehen in entgegengesetzte Richtungen eingerichtet sind, so dass ein gegen die Formwalze (2) gerichteter Teigfluss bestimmt wird.

2. Maschine nach Anspruch 1, bei der die erste Position θ 1) zwischen 180° und 270° enthalten ist, im Falle einer Drehung in Gegenuhrzeigersinnrichtung durch die Formwalze (2), oder zwischen 270° und 360°, im Falle einer Drehung in Uhrzeigersinnrichtung durch die Formwalze (2).

3. Maschine nach Anspruch 1 oder Anspruch 2, bei der die zweite Winkelposition (θ2) jenseits von 270° ist, vorzugsweise zwischen 270° und 360°, im Falle einer Drehung in Gegenuhrzeigersinnrichtung durch die Formwalze (2), oder aber vor 270° ist, vorzugsweise zwischen 180° und 270°, im Falle einer Drehung im Uhrzeigersinnrichtung durch die Formwalze (2).

4. Maschine nach einem der vorstehenden Ansprüche, bei der die erste Winkelposition (θ1) ungefähr 180° und die zweite Winkelposition (θ2) ungefähr 360° ist, im Falle einer Drehung in Gegenuhrzeigersinnrichtung durch die Formwalze (2), und umgekehrt, im Falle einer Drehung in Uhrzeigersinnrichtung durch die Formwalze (2).

5. Maschine nach Anspruch 1, die eine Steuereinheit zur Regulierung der Drehgeschwindigkeit der ersten und zweiten Walze (4A, 4B) als eine Funktion eines vorbestimmten Parameters aufweist, der den Druck anzeigt, der auf den in die Formkavitäten gepressten Teig ausgeübt wird.

6. Maschine nach Anspruch 5, bei der die erste und die zweite Walze (4A, 4B) so eingerichtet sind, dass sie einzeln, auf getrennte Weise, reguliert werden können.

7. Maschine nach Anspruch 1, bei der die erste und die zweite Walze (4A, 4B) so eingerichtet sind, dass sie einen Teigfluss in einer Richtungssekante in Bezug auf die Formwalze bestimmen.

8. Maschine nach einem der vorstehenden Ansprüche, die eine Klinge (5) aufweist, die seitlich in Bezug auf den Satz der Walzen (2, 4A, 4B) angeordnet ist.

9. Maschine nach einem der vorhergehenden Ansprüche, bei der sich das Band (8) von der Formwalze (2) trennt und einem Weg in einer horizontalen Ebene folgt.

10. Verfahren zum Formen von Teig für im Ofen gebackene Produkte, das mittels einer Maschine gemäß einem der vorstehenden Ansprüche durchgeführt wird und die folgenden Schritte aufweist:
- Bereitstellen des Teigs von dem Boden des Trichters (6);
- Vorsehen eines gegen die Formwalze (2) gerichteten Teigflusses am Ausgang des Trichters (4) und, mittels der ersten und zweiten Zuführwalze (4A, 4B), Drücken des Teigs in die Formen (2') der Formwalze (2), so dass Halbfertigprodukte gebildet werden, jedes in einer entsprechenden Form;
- Pressen der Halbfertigprodukte gegen die Formen (2') über das Förderband (8), startend von der ersten Winkelposition (θ1) bis zu der zweiten Winkelposition (θ2); und
- Entnehmen, über das Band, der Halbfertigprodukte und Zuführen dieser zu einer Verarbeitungsstation, die stromabwärts der Maschine ist.

11. Verfahren nach Anspruch 10, bei dem der Teigfluss in Bezug auf die Formwalze (2) in einer Richtungssekante ausgerichtet wird.

## Revendications

1. Machine de moulage de pâte pour produits cuits au four, du type comprenant :
- une trémie (6) ouverte sur le dessous et conçue pour contenir la pâte à mouler ;
- un rouleau de moulage rotatif (2), qui possède, sur sa surface latérale extérieure, une pluralité de moules de mise en forme (2') ;
- un premier et un second rouleaux d'alimentation (4A, 4B), configurés pour pousser la pâte qui provient de ladite trémie dans lesdits moules dudit rouleau de moulage afin de former des produits semi-finis, chacun dans un moule respectif ; et
- une courroie de transport (8) destinée à fournir lesdits produits semi-finis à des postes de traitement suivants, où ladite courroie passe par-dessus ledit rouleau de moulage en vue d'un étirage (2), en entrant en contact avec ladite surface latérale dudit rouleau de moulage dans une première position angulaire (θ1) autour dudit rouleau de moulage, et en se détachant de ladite surface latérale dans une seconde position angulaire (θ2) en aval de ladite première position angulaire (θ1), en référence à la direction de rotation dudit rouleau, de façon à retirer lesdits produits semi-finis desdits moules de mise en forme (2'),
dans laquelle ladite première position angulaire (θ1) est située avant la position de 270°, en cas de rotation dans le sens inverse des aiguilles d'une montre par ledit rouleau de moulage (2), et au-delà de la position de 270°, en cas de rotation dans le sens des aiguilles d'une montre, de sorte que ladite courroie (8) passe par-dessus ledit rouleau de moulage (2) entre lesdites première et seconde positions angulaires, et maintienne lesdits produits semi-finis en position, dans lesdits moules, contre l'action de la force de gravité,
lesdites positions angulaires faisant référence à la circonférence goniométrique sur un plan cartésien défini de manière orthogonale par rapport à l'axe de rotation dudit rouleau de moulage (2) et par rapport à l'origine des axes des coordonnées positionnées sur ledit axe de rotation, où les angles sont mesurés dans le sens inverse des aiguilles d'une montre en partant du point d'intersection entre la circonférence et le semi-axe positif des abscisses,
dans laquelle ledit premier rouleau d'alimentation (4A) et ledit second rouleau d'alimentation (4B) sont opposés l'un à l'autre et sont positionnés sous ladite trémie (4) de façon à recevoir dans l'espace situé entre eux la pâte qui est fournie par le biais du fond de la trémie, et dans laquelle lesdits premier et second rouleaux d'alimentation (4A, 4B) sont positionnés au-dessus dudit rouleau de moulage (2),
dans laquelle lesdits premier et second rouleaux (4A, 4B) sont prédisposés afin de tourner dans des directions opposées de façon à déterminer un flux de pâte orienté contre ledit rouleau de moulage (2).

2. Machine selon la revendication 1, dans laquelle ladite première position (θ1) est comprise entre 180° et 270°, en cas de rotation dans le sens inverse des aiguilles d'une montre par ledit rouleau de moulage (2), ou entre 270° et 360°, en cas de rotation dans le sens des aiguilles d'une montre par ledit rouleau de moulage (2).

3. Machine selon la revendication 1 ou 2, dans laquelle ladite seconde position angulaire (θ2) se trouve au-delà de 270°, de préférence entre 270° et 360°, en cas de rotation dans le sens inverse des aiguilles d'une montre par ledit rouleau de moulage (2), ou en deça de 270°, de préférence entre 180° et 270°, en cas de rotation dans le sens des aiguilles d'une montre par ledit rouleau de montage (2).

4. Machine selon l'une quelconque des revendications précédentes, dans laquelle ladite première position angulaire (θ1) se trouve approximativement à 180° et ladite seconde position angulaire (θ2) se trouve approximativement à 360°, en cas de rotation dans le sens inverse des aiguilles d'une montre par ledit rouleau de moulage (2), et vice versa, en cas de rotation dans le sens des aiguilles d'une montre par ledit rouleau de moulage (2).

5. Machine selon la revendication 1, comprenant une unité de commande destinée à réguler la vitesse de rotation desdits premier et second rouleaux (4A, 4B) en fonction d'un paramètre prédéterminé qui indique la pression exercée sur la pâte pressée dans lesdites cavités de moule.

6. Machine selon la revendication 5, dans laquelle lesdits premier et second rouleaux (4A, 4B) sont prédisposés pour être régulés individuellement, de manière distincte.

7. Machine selon la revendication 1, dans laquelle lesdits premier et second rouleaux (4A, 4B) sont prédisposés pour déterminer un flux de pâte dans une direction sécante par rapport audit rouleau de moulage.

8. Machine selon l'une quelconque des revendications précédentes, comprenant une lame (5) positionnée latéralement par rapport à l'ensemble desdits rouleaux (2, 4A, 4B).

9. Machine selon l'une quelconque des revendications précédentes, dans laquelle ladite courroie (8) est séparée dudit rouleau de moulage (2), en suivant un trajet sur un plan horizontal.

10. Processus de moulage de pâte destinée à des produits cuits au four mis en œuvre via une machine selon l'une quelconque des revendications précédentes, comprenant les étapes consistant à :
- fournir la pâte par le fond de ladite trémie (6) ;
- prévoir, à la sortie de ladite trémie (4), un flux de pâte orienté contre ledit rouleau de moulage (2) et, à l'aide desdits premier et second rouleaux d'alimentation (4A, 4B), pousser la pâte dans lesdits moules (2') dudit rouleau de moulage (2), afin de former des produits semi-finis, chacun dans un moule respectif ;
- presser lesdits produits semi-finis contre lesdits moules (2') via ladite courroie de transport (8), en partant de ladite première position angulaire (θ1), jusqu'à ladite seconde position angulaire (θ2) ; et
- extraire, via ladite courroie, lesdits produits semi-finis, et les fournir à un poste de traitement en aval de ladite machine.

11. Processus selon la revendication 10, dans lequel ledit flux de pâte est orienté dans une direction sécante par rapport audit rouleau de moulage (2).
